Europäisches Patentamt

European Patent Office

Office européen des brevets

(11) Veröffentlichungsnummer: **0 511 564 A1**

## (12) EUROPÄISCHE PATENTANMELDUNG

(21) Anmeldenummer: **92106711.2**

(22) Anmeldetag: **18.04.92**

(51) Int. Cl.5: **B29C  49/42**

(30) Priorität: **27.04.91 DE 4113874**

(43) Veröffentlichungstag der Anmeldung:
**04.11.92 Patentblatt  92/45**

(84) Benannte Vertragsstaaten:
**DE ES FR GB IT**

(71) Anmelder: **KRUPP CORPOPLAST MASCHINENBAU GMBH**
**Postfach 730 340, Meiendorfer Strasse 203**
**W-2000 Hamburg 73(DE)**

(72) Erfinder: **Schönebeck, Olaf**
**Siekerlandstrasse 146**
**W-2070 Gross Hansdorf(DE)**

(74) Vertreter: **Klickow, Hans-Henning et al**
**Patentanwälte**
**Hansmann-Klickow-Hansmann**
**Jessenstrasse 4**
**W-2000 Hamburg 50(DE)**

(54) **Vorrichtung zur Blasverformung von Kunststoff.**

(57) Die Vorrichtung zur Blasverformung von einem thermoplastischen Kunststoff weist eine Heizeinrichtung zur Temperierung von Vorformlingen und eine Blaseinrichtung zur Blasverformung der Vorformlinge in einen Behälter auf. Zur Ansteuerung mindestens einer im Bereich der Blaseinrichtung angeordneten Blasstation ist mindestens eine vorspannbare Steuerscheibe vorgesehen. Die Steuerscheibe wird von mindestens einer pneumatischen Feder gegenüber einer Mitnehmerscheibe vorgespannt und ist mit einer einen druckfreien Wartungsbetrieb zulassenden Druckablaßeinrichtung verbunden.

Fig.3

Die Erfindung betrifft eine Vorrichtung zur Blasverformung von einem thermoplastischen Kunststoff, die eine Heizeinrichtung zur Temperierung von Vorformlingen und eine Blaseinrichtung zur Blasverformung der Vorformlinge in einen Behälter aufweist und bei der zur Ansteuerung mindestens einer im Bereich der Blaseinrichtung angeordneten Blasstation mindestens eine vorspannbare Steuerscheibe vorgesehen ist.

Derartige Vorrichtungen werden beispielsweise verwendet, um Vorformlinge aus einem thermoplastischen Material, insbesondere Vorformlinge aus Polyäthylenterephthalat, zu Behältern zu verformen. Zur Temperierung der Vorformlinge sind im Bereich der Heizeinrichtung Heizelemente angeordnet, die den Vorformling temperierende Energie emittieren. Nach ihrer Temperierung werden die Vorformlinge an die Blaseinrichtung übergeben und dort im Bereich von Blasstationen zu Behältern verformt. Insbesondere bei als Blasrad ausgebildeten Blaseinrichtungen werden Steuerscheiben verwendet, die in Kombination mit Mitnehmerscheiben in Abhängigkeit von einer Rotationspositionierung pneumatische Elemente im Bereich der Blasstation mit Arbeitsluft versorgen. Im Bereich der Steuerscheibe sind hierzu nutförmige Ausnehmungen vorgesehen, die bereichsweise druckführend und bereichsweise druckableitend ausgebildet sind. Entlang der nutförmigen Ausnehmungen werden Bohrungen im Bereich der Mitnehmerscheibe geführt und über die entsprechenden Bohrungen den angeschlossenen pneumatischen Elementen ein Arbeitsdruck zugeführt, bzw. in den Bereich der pneumatischen Elemente geförderte Druckluft abgelassen. Zur Gewährleistung einer kompakten Ausführung ist die Steuerscheibe gegenüber der Mitnehmerscheibe durch eine vergleichsweise dünne, flächige Dichtung abgedichtet. Zur Gewährleistung einer ausreichend zuverlässigen Abdichtung ist die Steuerscheibe gegenüber der Mitnehmerscheibe vorgespannt. Die Vorspannung kann beispielsweise so erfolgen, daß die Steuerscheibe ortsfest angeordnet und die Mitnehmerscheibe rotationsfähig bezüglich einer Mittelsäule gelagert wird. Im Bereich ihrer der Steuerscheibe abgewandten Ausdehnung wird die Mitnehmerscheibe von einer sie relativ zur Steuerscheibe verspannenden Feder beaufschlagt. Zur konstruktiven Realisierung einer derartigen Feder ist es bekannt, mechanische Federelemente, beispielsweise Tellerfedern, zu verwenden.

Die Verwendung derartiger Tellerfedern weist jedoch den Nachteil auf, daß zur Ermöglichung einer Beweglichkeit der Mitnehmerscheibe relativ zur Steuerscheibe und damit zur Schaffung einer Möglichkeit zu einer Positionierung des Blasrades in einem Wartungs- oder Servicebetrieb, über eine pneumatische Versorgung eine die Federkraft der Tellerfeder kompensierende Gegenkraft erzeugt werden muß. Dies hat zur Folge, daß ein druckloser Betrieb der Vorrichtung nicht möglich ist. Gerade beim Auftreten von Störungen im Bereich der Maschine oder bei der Durchführung von Service- und Justierungsarbeiten ist aber zur Vermeidung einer Gefährdung von im Bereich der Vorrichtung arbeitenden Personen ein druckloses Arbeiten anzustreben.

Die Verwendung von mechanischen Federelementen weist darüber hinaus den Nachteil aus, daß bei einer Montage Spannkräfte aufgebracht werden müssen, die den Montageaufwand erhöhen.

Aufgabe der vorliegenden Erfindung ist es daher, eine Vorrichtung der einleitend genannten Art derart zu verbessern, daß die Montage- und Serviceeigenschaften verbessert werden.

Diese Aufgabe wird erfindungsgemäß dadurch gelöst, daß die Steuerscheibe von mindestens einer pneumatischen Feder gegenüber einer Mitnehmerscheibe vorspannbar ist und die pneumatische Feder mit einer einen druckfreien Wartungsbetrieb zulassenden Druckablaßeinrichtung verbunden ist.

Die Verwendung einer pneumatischen Feder ermöglicht es, die Vorspannungskraft von einem zu verteilenden Versorgungsdruck abzuleiten. Bei einer Abschaltung des Versorungsdruckes wird gleichzeitig auch die Federkraft zurückgenommen. In einem drucklosen Wartungsbetrieb ist es somit ohne weiteres möglich, Drehbewegungen im Bereich des Blasrades durchzuführen, ohne daß mechanische Vorspannungskräfte kompensiert werden müßten. Die Ausbildung der Vorspannungseinrichtung als pneumatische Feder weist darüber hinaus den Vorteil auf, daß bei einer Montage keine Vorspannkräfte aufzubringen sind. Die Elemente der pneumatischen Feder können vielmehr ohne wesentliche Krafteinleitung montiert werden und die Vorspannungskräfte werden erst bei einer Inbetriebnahme nach einer Einschaltung des Versorgungsdruckes bereitgestellt.

Gemäß einer bevorzugten Ausführungsform der Erfindung wird vorgeschlagen, daß die pneumatische Feder als mindestens ein von einer Membran beaufschlagter Kolben ausgebildet ist. Derartige Membrane sind insbesondere zur Durchführung von kurzhubigen Verstellbewegungen geeignet und ermöglichen die Positionierung eines Kolbens, der die Vorspannung auf die Mitnehmerscheibe überträgt.

Gemäß einer anderen bevorzugten Ausführungsform ist vorgesehen, daß der Kolben als ein Ringkolben ausgebildet ist, der im wesentlichen zentrisch zu einer Drehachse der Mitnehmerscheibe angeordnet ist. Durch die Ausbildung als Ringkolben ist gewährleistet, daß trotz einer vergleichsweise einfachen Ansteuerung eine große Druckfläche bereitgestellt wird und deshalb eine effektive Kraftübertragung ermöglicht wird.

Gemäß einer weiteren bevorzugten Ausführungsform werden die Montage- und Wartungseigenschaften zusätzlich dadurch verbessert, daß ein zur Einstellung eines Versorgungsdruckes verwendeter Druckminderer zweistufig ausgebildet wird. Die zweistufige Ausbildung ermöglicht es, über einen Einstelldruckregler, der beispielsweise mit einem Handrad versehen ist, eine Stellgröße vorzugeben, die zur Einstellung des Hauptdruckregelers verwendet wird. Bislang erforderliche aufwendige mechanische Einstellarbeiten mit Hilfe von Verstellnadeln können hierdurch vermieden werden.

Eine weitere Verbesserung der Montageeigenschaften wird dadurch erreicht, daß mindestens im Bereich von die Heizeinrichtung mit der Blaseinrichtung verbindenden Übergabelementen drehsteife Kupplungen angeordnet sind. Die Verwendung derartiger Kupplungen weist den Vorteil auf, daß eine mit vergleichsweise großen Toleranzen behaftete Montage durchgeführt werden kann und Abweichungen bezüglich einer Neigung und einem Versatz im Bereich von Drehachsen ausgeglichen werden.

Weitere Einzelheiten der vorliegenden Erfindung ergeben sich aus der nachfolgenden ausführlichen Beschreibung und den beigefügten Zeichnungen, in den bevorzugte Ausführungsformen der Erfindung beispielsweise veranschaulicht sind.

In den Zeichnungen zeigen:

Fig. 1:	Eine prinzipielle Darstellung einer im wesentlichen aus einem Heizrad und einem Blasrad ausgebildeten Vorrichtung,

Fig. 2:	eine teilweise geschnittene Seitenansicht einer Blaseinrichtung, die mit einer Steuerscheibe und einer rotationsfähig gelagerten Mitnehmerscheibe versehen ist und bei der die Mitnehmerscheibe und die Steuerscheibe von einer pneumatischen Feder gegeneinander verspannt sind,

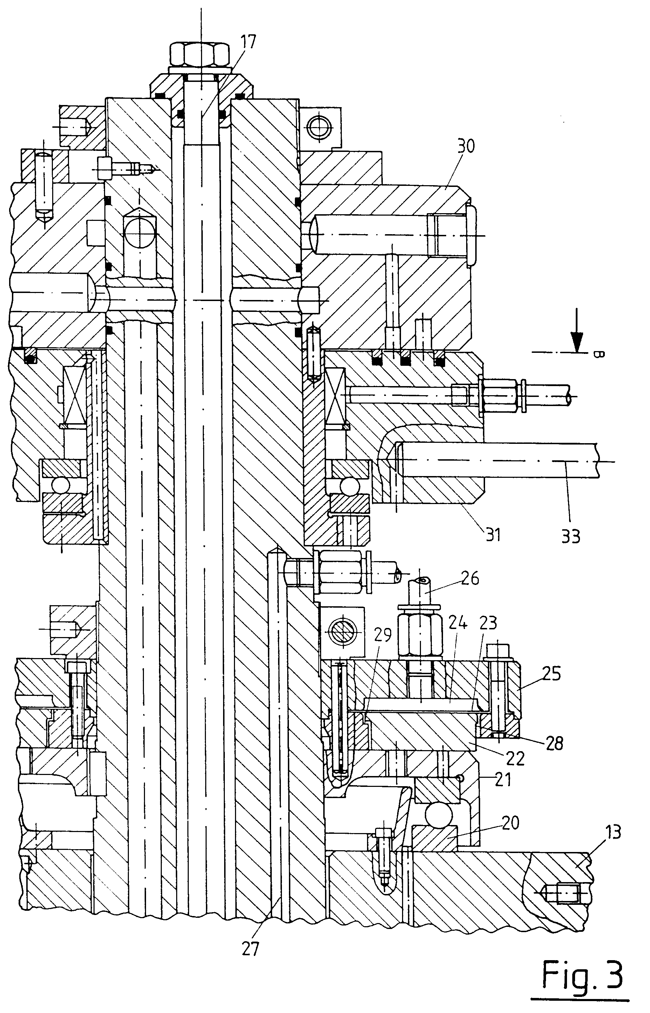

Fig. 3:	eine vergrößerte Darstellung der Vorrichtung gemäß Fig. 2 im Bereich der pneumatischen Feder,

Fig. 4:	eine Prinzipdarstellung einer Draufsicht auf eine Steuerscheibe,

Fig. 5:	eine geschnittene Darstellung eines zweistufigen Druckminderers, bei der im Bereich des Hauptdruckminderers zwei Arbeitspositionierungen abgebildet sind,

Fig. 6:	ein pneumatisches Schaltbild zur Verdeutlichung der Funktion des Druckminderers,

Fig. 7:	eine Prinzipdarstellung der pneumatischen Verschaltung im Bereich einer Blasstation,

Fig. 8:	eine Seitenansicht einer Kombination einer drehsteifen Kupplung und einer Überlastkupplung **und**

Fig. 9:	eine Prinzipdarstellung eines Umlaufes von Adaptern zur Aufnahme von Vorformlingen im Bereich eines Blasrades, eines Entladerades sowie eines Heizrades.

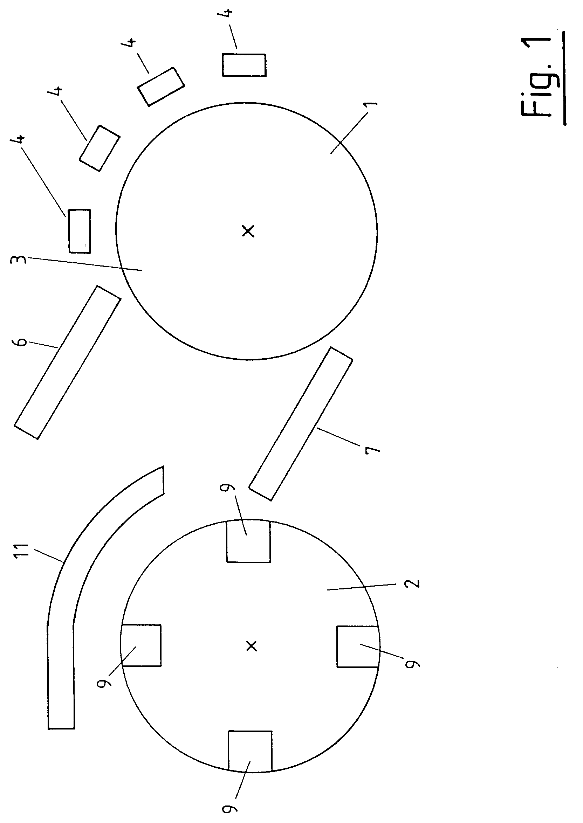

Eine Vorrichtung zur Blasverformung von Kunststoff besteht im wesentlichen aus einer Heizeinrichtung (1) sowie einer Blaseinrichtung (2). Bei der Ausführungsform gemäß Fig. 1 ist die Heizeinrichtung (1) als ein Heizrad (3) ausgebildet, das rotationsfähig gelagert ist und in dessen Bereich Heizelemente (4) angeordnet sind, die Vorformlinge (5) aus einem thermoplastischen Material temperieren. Die Vorformlinge (5) werden von einer Zuführung (6) in den Bereich des Heizrades (3) geleitet. Nach einer ausreichenden Temperierung werden die Vorformlinge (5) von einer Übergabeeinrichtung (7) an die als Blasrad (8) ausgebildete Blaseinrichtung (2) übergeben. Im Bereich des Blasrades (8) sind Blasstationen (9) angeordnet, die den zu verformenden Vorformling (5) aufnehmen und in deren Bereich der Vorformling (5) mit einem Blasdruck beaufschlagt wird, der ihn gegen Formhälften der Blasstation (9) drückt und zu einer vorgegebenen Behälterkontur ausformt. Nach einer vollständigen Ausformung des zu erzeugenden Behälters (10), beispielsweise einer Flasche, wird der Behälter (10) mit Hilfe einer Entnahmevorrichtung (11) aus dem Bereich des Blasrades (8) weggeführt.

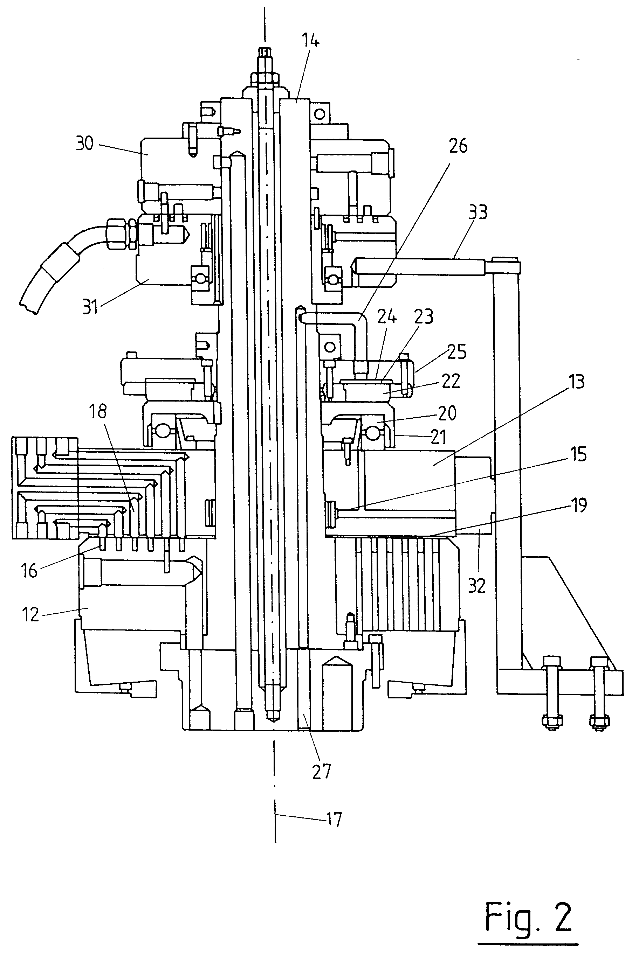

Bei der Darstellung gemäß Fig. 2 ist ein Teil des Blasrades (8) abgebildet, in dessen Bereich eine Steuerscheibe (12) sowie eine Mitnehmerscheibe (13) angeordnet ist. Die Steuerscheibe (12) ist ortsfest mit einer Mittelsäule (14) verbunden, relativ zu der die Mitnehmerscheibe (13) rotationsfähig geführt ist. Zur Führung der Mitnehmerscheibe (13) relativ zur Mittelsäule (14) ist ein Lager (15) vorgesehen, das beispielsweise als ein Nadellager ausgebildet ist. Die Steuerscheibe (12) weist Nuten (16) auf, die im wesentlichen konzentrisch zu einer Mittellinie (17) der Mittelsäule (14) angeordnet sind. Durch eine entsprechende Unterteilung der Nuten (16) ist es möglich, sowohl eine Druckzufuhr als auch eine Druckableitung mit Hilfe der Nuten (16) zu ermöglichen. Zum Abgriff des jeweils im Bereich der Nuten (16) vorgesehenen Druckzustandes weist die Mitnehmerscheibe (13) Bohrungen (18) auf, die sich im wesentlichen quer zu einer Trennebene (19) erstrecken, die die Steuerscheibe (12) von der Mitnehmerscheibe (13) trennt. Im Bereich der Trennebene (19) ist eine Flächendichtung zur Gewährleistung einer ausreichenden Abdichtung angeordnet.

Die Mitnehmerscheibe (13) ist im Bereich ihrer der Steuerscheibe (12) abgewandten Ausdehnung mit einem Axiallager (20) verbunden, das von einem Führungselement (21) gegenüber der Mittelsäule (14) ausgerichtet ist. Im Bereich seiner dem Axiallager (20) abgewandten Ausdehnung wird das Führungselement (21) von einem Kolben (22) beaufschlagt, der sich im Bereich seiner dem Führungselement (21) abgewandten Ausdehnung an einer Membran (23) abstützt. Die Membran (23), der Kolben (22) sowie das Führungselement (21) sind in Richtung der Mittellinie (17) verschieblich angeordnet. Die Membran (23) trennt den Kolben (22) von einem Innenraum (24), der im Bereich seiner der Membran (23) abgewandten Ausdehnung von einem Gehäuse (25) begrenzt ist. Das Gehäuse (25) ist fest mit der Mittelsäule (14) verbunden und dient als Gegenlager zur Aufnahme der aus der Druckbeaufschlagung der Mitnehmerscheibe (13) resultierenden Gegenkräfte. Der Innenraum (24) ist über eine Verbindungsleitung (26) mit einer Druckluftversorgung (27) verbunden, die sich im Bereich der Mittelsäule (14) erstreckt.

Zur Gewährleistung einer ausreichend großen Druckfläche ist insbesondere daran gedacht, den Kolben (22) als einen Ringkolben auszubilden, der im wesentlichen konzentrisch zur Mittellinie (17) angeordnet ist. Zur Begrenzung eines Hubes des Kolbens (22) ist es möglich, den Kolben (22) mit einem Absatz (28) zu versehen, der einen Vorsprung (29) hintergreift, der im Bereich des Gehäuses (25) angeordnet ist. Die Steuerscheibe (12) und die Mitnehmerscheibe (13) sind insbesondere dazu geeignet, Arbeitsluft zur Betätigung von pneumatischen Elementen im Bereich der Blasstation (19) zu koordinieren. Zur Zuführung von die Vorformlinge (5) in Behälter (10) umformender Blasluft sind eine Blasluftsteuerscheibe (30) sowie eine Blasluftmitnehmerscheibe (31) vorgesehen. Auch hier wird durch konzentrische Nuten und entsprechende Bohrungen eine Koordinierung der Druckzuleitung vorgenommen. Über Mitnehmer (32,33) sind die Blasluftmitnehmerscheibe (31) sowie die Mitnehmerscheibe (13) mit dem rotierenden Blasrad (8) verbunden.

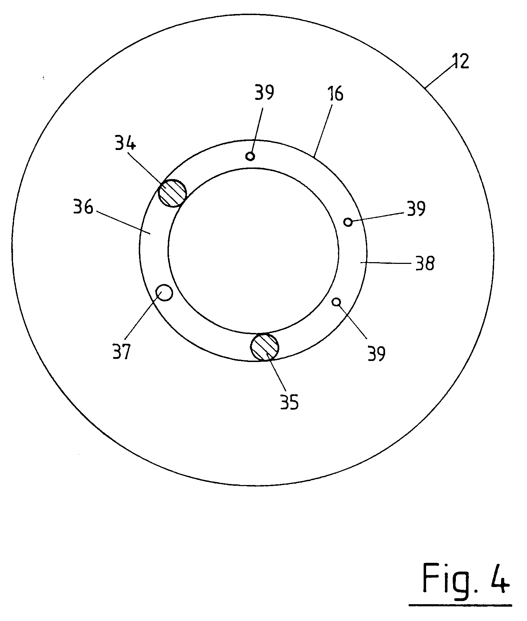

Bei der Darstellung gemäß Fig. 4 ist die Nut (16) im Bereich der Steuerscheibe (12) von Trennelementen (34,35) unterteilt. Ein Sektor (36) wird über eine Bohrung (37) mit Druckluft versorgt und im Bereich eines Sektors (38) sind Entlüftungsbohrungen (39) zur Druckluftabfuhr vorgesehen.

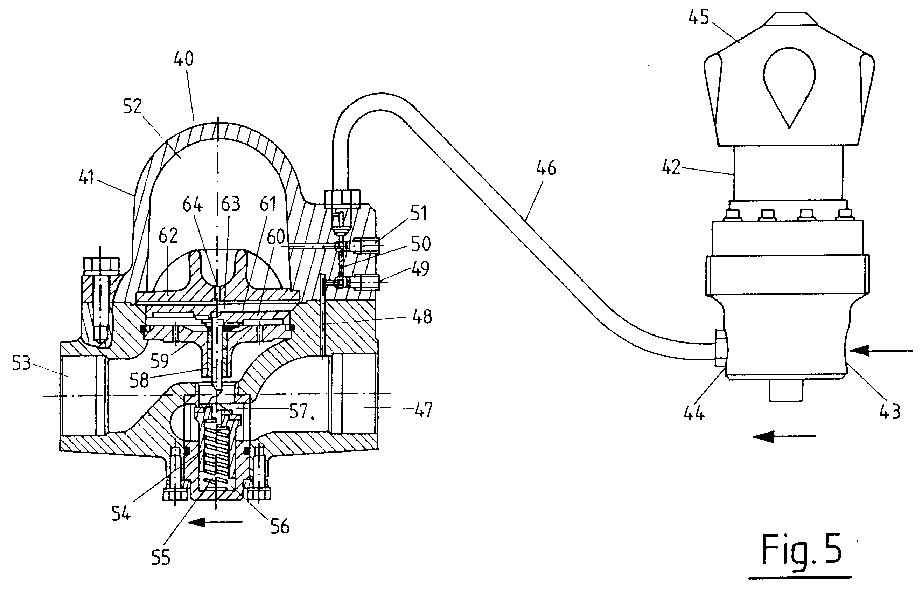

Zur Einstellung der Höhe der zu verteilenden Drücke kann ein in Fig. 5 dargestellter Druckregler (40) verwendet werden. Der Druckregler (40) besteht aus einem Hauptregler (41) sowie einem Vorregler (42). Der Vorregler (42) ist mit einem Einlaß (43) und einem Auslaß (44) versehen. Zwischen dem Einlaß (43) und dem Auslaß (44) ist ein den Strömungswiderstand einstellendes Absperrelement angeordnet, das mit einem Handrad (45) positionierbar ist. Über eine Verbindungsleitung (46) führt der Vorregler (42) einen Steuerdruck dem Hauptregler (41) zu. Der Hauptregler (41) weist einen Einlaß (47) auf, der über eine Verbindungsbohrung (48) mit einem Einlaßnadelventil (49) verbunden ist. Über eine Verbindungsbohrung (50) steht das Einlaßnadelventil (49) mit einem Steuernadelventil (51) in Verbindung. In den Bereich des Steuernadelventils (51) ist auch die Verbindungsleitung (46) geführt. Eine weitere Verbindung besteht zu einem Dominnenraum (52), der mit einem Auslaß (53) verbindbar ist. Zur Beeinflußung eines Strömungswiderstandes zwischen dem Einlaß (47) und dem Auslaß (53) ist ein Sperrelement (54) vorgesehen, das von einer Feder (55) vorgespannt ist.

Die Feder (55) erstreckt sich im wesentlichen in einem Innenraum (56) des im wesentlichen zylinderisch ausgebildeten Sperrelementes (54). Das Sperrelement (54) ist in einem Verbindungskanal (57) angeordnet, der den Einlaß (47) mit dem Auslaß (53) verbindet. Eine Positionierung des Sperrelementes (54) erfolgt von einer Verstellnadel (58), die das Sperrelement (54) mit einer der Kraft der Feder (55) entgegenwirkenden Verstellkraft beaufschlagt. Die Verstellnadel (58) ist im Bereich einer Lagerung (59) geführt und wird von einem Verstellkolben (60) beaufschlagt, dessen der Verstellnadel (58) abgewandte Begrenzung einer Membran (61) zugewandt ist. Die Membran (61) sowie ein Domboden (62) begrenzen einen Hubraum (63), der über einen Durchbruch (64) mit dem Dominnenraum (52) verbunden ist.

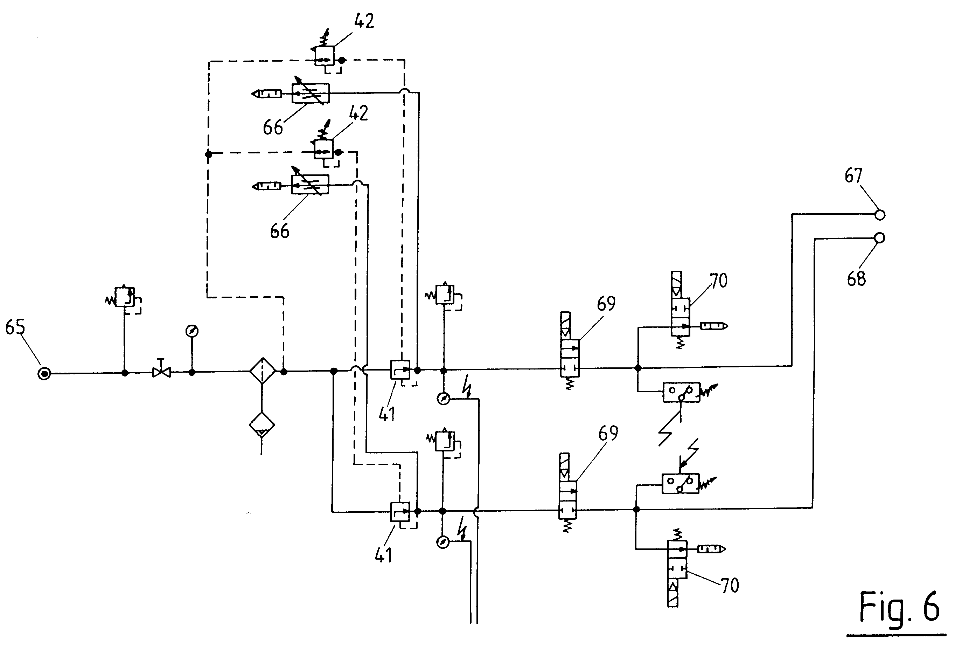

Zur Einstellung eines Druckes im Bereich des Auslasses (53) wird dem Einlaß (47) des Hauptreglers (41) sowie dem Einlaß (43) des Vorreglers (42) ein Versorgungsdruck zugeführt. Das Einlaßnadelventil (49) ist bei dieser Betriebsweise geschlossen und das Steuernadelventil (51) geöffnet. Aufgrund der Bereitstellung des Steuerdruckes durch den Vorregler (42) entfallen aufwendige Justierungsarbeiten im Bereich der Nadelventile (49,51). Aufgrund des sich im Bereich des Dominnenraumes (52) einstellenden Druckes wird die Membran (61) verschoben und der Verstellkolben (60) positioniert. Die Positionierung des Verstellkolbens (60) wird auf die Verstellnadel (58) übertragen und durch das Zusammenwirken der im Bereich der Membran (61) auftretenden Druckkraft und der von der Feder (55) bereitgestellten Gegenkraft erfolgt eine Einstellung des Sperrelementes (54). Bei der in Fig. 6 dargestellten pneumatischen Anordnung sind zwei Hauptregler (41) vorgesehen, die von jeweils einem Vorregler (42) angesteuert werden. Die Hauptregler (41) und Vorregler (42) werden von einem gemeinsamen Versorgungsanschluß (65) gespeist. Zur Gewährleistung eines Mindestströmvolumens sind die Auslässe (53) der Hauptregler (41) mit Ablaßeinrichtungen (66) verbunden. Über Abgriffe (67,68) kann eine Zufuhr der Druckluft zur Blaseinrichtung (2) erfolgen. Eine Zuschaltung der Blasluft erfolgt mit Hilfe von Magnetventilen (69,70). Mit Hilfe der Magnetventile (70) kann eine Entlüftung der der Blaseinrichtung (2) zugewandten Leitungen erfolgen.

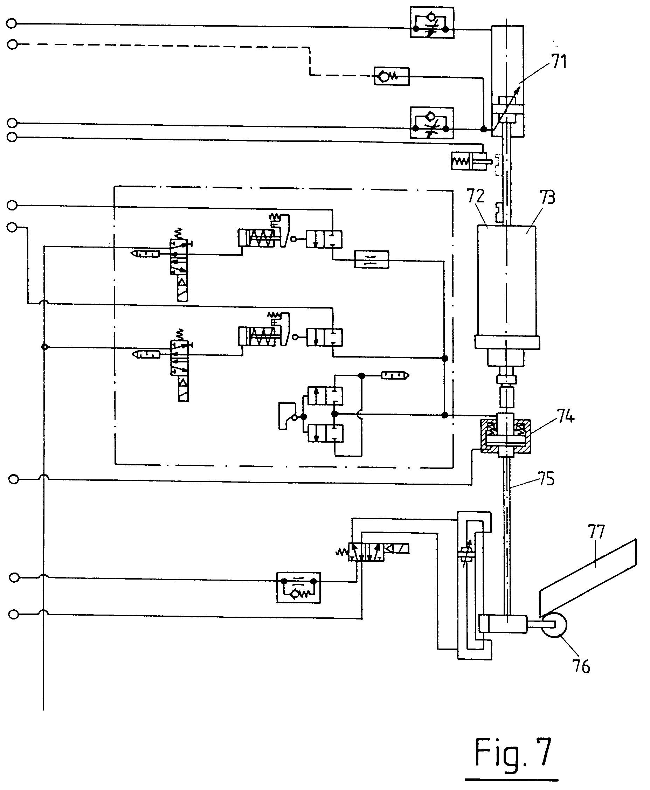

Fig. 7 zeigt wesentliche pneumatische Elemente im Bereich der Blasstation (9). Es ist ein Hubzylinder (71) zur Positionierung einer Bodenform, Blasformhälften (72, 73) zur Konturvorgabe des auszubildenden Behälters (10), ein abgewandt zum Hubzylinder (71) angeordneter Anschlußkolben (74) sowie eine Reckstange (75) vorgesehen. Zur Koordinierung einer Hubbewegung der Reckstange (75) ist eine Führungsrolle (76) vorgesehen, die eine vorgegebene Kurvenbahn (77) abtastet.

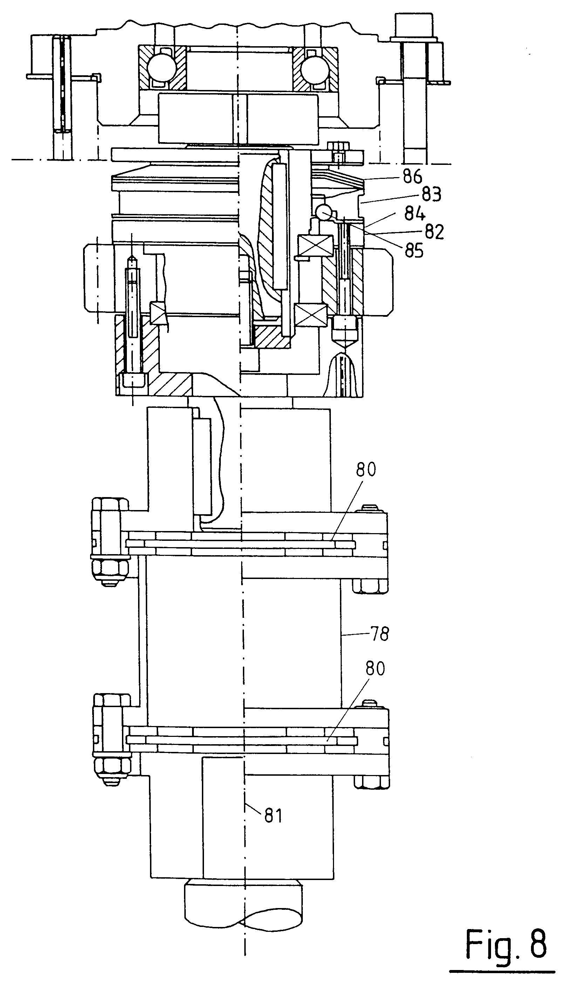

Fig. 8 zeigt eine Seitenansicht einer Toleranzen ausgleichenden drehsteifen Kupplung (78). Eine derartige drehsteife Kupplung (78) kann insbesondere zweckmäßigerweise im Bereich einer Übergabeeinrichtung (7) bzw. im Bereich einer Ladestation (79) angeordnet werden. Im Bereich der drehsteifen Kupplung (78) sind Blechpakete (80) angeordnet, die in einer quer zu einer Längsachse (81) verlaufenden Richtung flexibel ausgebildet sind und durch diese Flexibilität Neigungen und Achsenversätze der miteinander zu verbindenden Komponenten ausgleichen. Es ist darüber hinaus eine Ausrastkupplung (82) vorgesehen, die eine Ausrastung bei einer vorgebbaren maximalen Belastung ermöglicht. Es sind hierzu Kupplungsteile (83,84) vorgesehen, in deren Bereich Ausnehmungen zur Führung einer Kugel (85) angeordnet sind. Beim Überschreiten einer zulässigen Belastung wird die Kugel (85) aus der Ausnehmung herausgedrückt und eine Verbindung zwischen den Kupplungsteilen (83,84) gelöst. Ein Zusammendrücken der Kupplungsteile (83,84) innerhalb des Betriebsbereiches wird durch eine Feder (86) gewährleistet. Die Ausrastkupplung (82) kann entweder so ausgebildet werden, daß sie nach einer Drehbewegung um 360 Grad wieder einrastet oder derart, daß eine Ausrastung in einen stabilen Zustand erfolgt und der ausgerastete Zustand bis zur Durchführung eines gezielten Einrastvorganges erhalten bleibt.

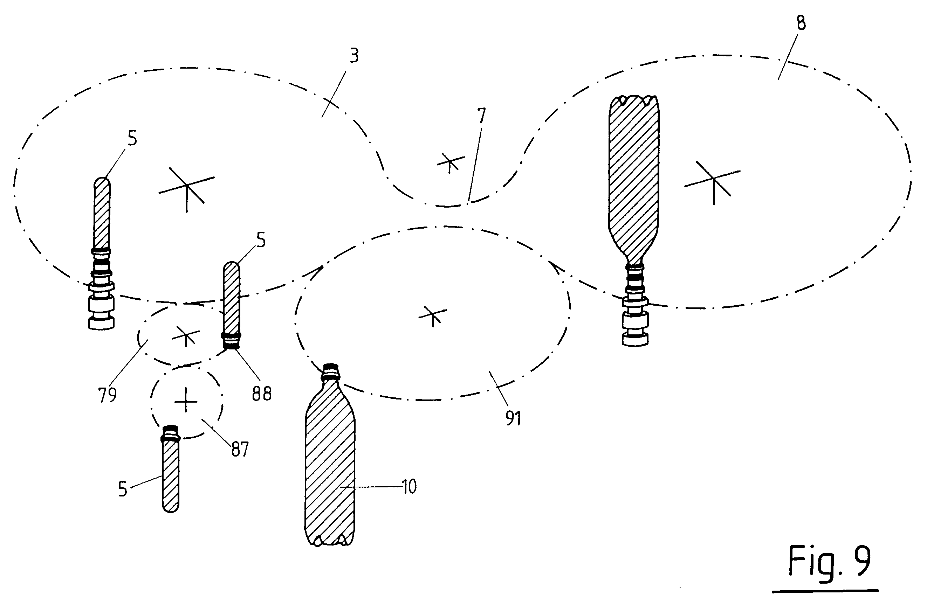

Zur Verdeutlichung der Funktionsweise der Vorrichtung ist in Fig. 9 ein Übersichtsbild angegeben. Der Vorformling (5) wird zunächst einem Wenderad (87) zugeführt, in dessen Bereich er mit einem Mündungsbereich (88) in lotrechter Richtung nach unten positioniert wird. Mit Hilfe einer Ladestation (79) erfolgt eine Übergabe an das Heizrad (3). Im Bereich des Heizrades (3) ist der Vorformling (5) von einem Adapter (90) gehalten. Der Adapter (90) wird von einer Übergabeeinrichtung (7) gemeinsam mit dem Vorformling (5) nach einer Durchführung der Beheizung an das Blasrad (8) übergeben und dort zu dem Behälter (10) verformt. Im Bereich eines Entladerades (91) wird der Behälter (10) vom Adapter (90) abgenommen und der Adapter (90) in den Bereich des Heizrades (3) zur Aufnahme eines neuen Vorformlings (5) zurückgeführt.

Durch die volumenunabhängige Krafterzeugung mit Hilfe der Membran (23) ist es möglich, Nachjustierungen, die aufgrund von Abnutzungserscheinungen erforderlich werden könnten, zu vermeiden. Die Größe der erzeugten Kraft ist lediglich von der Fläche der Membran (23) sowie der Höhe des Druckes im Bereich des Innenraumes (24) abhängig. Volumenveränderungen aufgrund von Abnutzungen bleiben somit ohne Einfluß.

**Patentansprüche**

1. Vorrichtung zur Blasverformung von einem thermoplastischen Kunststoff, die eine Heizeinrichtung zur Temperierung von Vorformlingen und eine Blaseinrichtung zur Blasverformung der Vorformlinge in einen Behälter aufweist und bei der zur Ansteuerung mindestens einer im Bereich der Blaseinrichtung angeordneten Blasstation mindestens eine vorspannbare Steuerscheibe vorgesehen ist, dadurch gekennzeichnet, daß die Steuerscheibe (12) von mindestens einer pneumatischen Feder gegenüber einer Mitnehmerscheibe (13) vorspannbar ist und die pneumatische Feder mit einer einen druckfreien Wartungsbetrieb zulassenden Druckablaßeinrichtung verbunden ist.

2. Vorrichtung nach Anspruch 1, dadurch gekennzeichnet, daß die pneumatische Feder im wesentlichen aus einer Membran (23) und einem von der Membran (23) beaufschlagten Kolben (22) ausgebildet ist.

3. Vorrichtung nach Anspruch 2, dadurch gekennzeichnet, daß der Kolben (22) als ein im wesentlichen konzentrisch zu einer Rotationsachse der Mitnehmerscheibe (13) angeordneter Ringkolben ausgebildet ist.

4. Vorrichtung nach einem der Ansprüche 1 bis 3, dadurch gekennzeichnet, daß die Steuerscheibe (12) ortsfest im Bereich einer Mittelsäule (14) angeordnet ist und die Mitnehmerscheibe (13) rotationsfähig im Bereich der Mittelsäule (14) geführt ist.

5. Vorrichtung nach einem der Ansprüche 1 bis 4, dadurch gekennzeichnet, daß die Blaseinrichtung (2) als ein rotationsfähig gelagertes Blasrad (8) ausgebildet ist, in dessen Bereich mindestens eine der Blasstationen (9) angeordnet ist.

6. Vorrichtung nach Anspruch 5, dadurch gekennzeichnet, daß die Blasstation (9) mit mindestens zwei eine Konturierung eines aus einem Vorformling (5) zu formenden Behälters (10) festlegenden Blasformhälften versehen ist.

7. Vorrichtung nach einem der Ansprüche 1 bis 6, dadurch gekennzeichnet, daß zur Zuführung von unterschiedlichen Blasdrücken mindestens zwei Druckregler vorgesehen sind.

8. Vorrichtung nach einem der Ansprüche 1 bis 7, dadurch gekennzeichnet, daß zur Beladung eines die Vorformlinge (5) im Bereich von Heizelementen (4) transportierenden Heizrades (3) eine Ladestation (89) vorgesehen ist.

9. Vorrichtung nach einem der Ansprüche 1 bis 8, dadurch gekennzeichnet, daß im Bereich der Ladestation (89) ein rotationsfähig gelagertes Transportrad angeordnet ist, das über eine drehsteife Kupplung (78) mit einem Antrieb verbunden ist.

10. Vorrichtung nach einem der Ansprüche 1 bis 9, dadurch gekennzeichnet, daß im Bereich der Ladestation (89) zur Verhinderung von Überlastungen eine Ausrastkupplung (82) angeordnet ist.

11. Vorrichtung nach einem der Ansprüche 1 bis 10, dadurch gekennzeichnet, daß das Heizrad (3) von einer Übergabeeinrichtung (7) mit dem Blasrad (8) gekoppelt ist.

12. Vorrichtung nach Anspruch 11, dadurch gekennzeichnet, daß im Bereich der Übergabeeinrichtung (7) ein rotationsfähig gelagertes Übergaberad angeordnet ist, das von einer drehsteifen Kupplung (78) mit einem Antrieb verbunden ist.

13. Vorrichtung nach einem der Ansprüche 1 bis 12, dadurch gekennzeichnet, daß die drehsteife Kupplung (78) über eine Ausrastkupplung (82) mit dem Übergaberad verbunden ist.

14. Vorrichtung nach einem der Ansprüche 1 bis 13, dadurch gekennzeichnet, daß im Bereich der Steuerscheibe (12) Nuten (16) angeordnet sind, die sich im wesentlichen konzentrisch zu einer Mittellinie (17) erstrecken und jeweils mindestens einen druckführenden Sektor (36) sowie einen druckableitenden Sektor (38) aufweisen.

15. Vorrichtung nach einem der Ansprüche 1 bis 14, dadurch gekennzeichnet, daß die Mitnehmerscheibe (13) von einem Axiallager (20) mit dem Kolben (22) verbunden ist.

16. Vorrichtung nach einem der Ansprüche 1 bis 15, dadurch gekennzeichnet, daß der Kolben (22) mit einem Absatz (28) versehen ist, der hubbegrenzend einen Vorsprung (39) hintergreift, der im Bereich eines den Kolben (22) führenden Gehäuses (25) angeordnet ist.

17. Vorrichtung nach einem der Ansprüche 1 bis 16, dadurch gekennzeichnet, daß zur Gewährleistung einer Druckluftversorgung mit vorgebbaren Druckverhältnissen ein Druckregler (40) vorgesehen ist, der im wesentlichen aus einem Hauptregler (41) sowie einem den Hauptregler (41) einstellenden Vorregler (42) ausgebildet ist.

18. Vorrichtung nach einem der Ansprüche 1 bis 17, dadurch gekennzeichnet, daß der Vorregler (42) mit einem seinen Strömungsquerschnitt festlegenden Handrad (45) verbunden ist.

19. Vorrichtung nach einem der Ansprüche 1 bis 18, dadurch gekennzeichnet, daß über einen vom Vorregler (42) bereitgestellten Steuerdruck im Bereich des Hauptreglers (42) ein Sperrelement (54) einen Strömungswiderstand festlegend positioniert wird.

Fig. 1

Fig. 2

Fig. 3

Fig. 4

Fig. 5

Fig. 6

**Fig.7**

Fig. 8

Fig. 9

8

7

3

91

10

5

5

5

88

87

79

| **EINSCHLÄGIGE DOKUMENTE** | | | EP 92106711.2 | |
|---|---|---|---|---|
| Kategorie | Kennzeichnung des Dokuments mit Angabe, soweit erforderlich, der maßgeblichen Teile | Betrifft Anspruch | **KLASSIFIKATION DER ANMELDUNG (Int Cl⁵)** | |
| A | US - A - 4 549 865 (MYERS) * Fig. 8B * -- | 1 | B 29 C 49/42 | |
| A | US - A - 4 309 380 (SAUER) * Fig. 6 * -- | 1 | | |
| A | DE - A - 3 815 192 (KRUPP CORPOPLAST MASCHINEN-BAU) * Gesamt * ---- | | | |
| | | | **RECHERCHIERTE SACHGEBIETE (Int Cl⁵)** B 29 C | |
| Der vorliegende Recherchenbericht wurde für alle Patentansprüche erstellt. | | | | |

| Recherchenort | Abschlußdatum der Recherche | Prüfer |
|---|---|---|
| WIEN | 12-06-1992 | REININGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82